# EUROPÄISCHE PATENTSCHRIFT

(11) **EP 0 637 181 B1**
(45) Veröffentlichungstag und Bekanntmachung des Hinweises auf die Patenterteilung: **13.03.2002**
(21) Anmeldenummer: 94202097.5
(22) Anmeldetag: 13.07.1994
(51) Int. Cl.: H04Q 7/38, H04B 7/26

(54) **Funksystem mit Frequenz-Optimierung**
Radio system with frequency optimization
Système radio avec optimisation de fréquence

(30) Priorität: 27.07.1993 DE 4325190
(43) Veröffentlichungstag der Anmeldung: 01.02.1995
(73) Patentinhaber: SIEMENS AKTIENGESELLSCHAFT, 80333 München (DE)
(72) Erfinder: Ritter, Gerhard, D-86943 Thaining (DE)

(56) Entgegenhaltungen:
- EP-A- 0 490 509
- PATENT ABSTRACTS OF JAPAN vol. 15, no. 423 (E-1127) 28. Oktober 1991 & JP-A-03 177 123 (SEKISUI CHEM CO LTD) 1. August 1991
- IEEE COMMUNICATIONS MAGAZINE., Bd.30, Nr.12, Dezember 1992, NEW-YORK (US) Seiten 90 - 95, XP330093 W.T. WEBB 'Modulation Methods for PCNs'
- IEEE COMMUNICATIONS MAGAZINE., Bd.28, Nr.5, Mai 1990, NEW-YORK (US) Seiten 5 - 14, XP132491 JOHN A.C. BINGHAM 'Multicarrier Modulation for Data Transmission: An Idea Whose Time Has Come'
- IEEE COMMUNICATIONS MAGAZINE., Bd.30, Nr.12, Dezember 1992, NEW-YORK (US) Seiten 96 - 115, XP330094 DONALD C. COX 'Wireless Network Access for Personal Communications'

## Beschreibung

Die Erfindung bezieht sich auf ein Funksystem, insbesondere ein Mobilfunksystem mit Funkfeststationen und Teilnehmern (Mobilstationen oder ortsfeste Stationen) mit geringer Geschwindigkeit bis hin zum Stillstand.

In Funksystemen liegt normalerweise eine Mehrwegeausbreitung vor. An der Empfangsantenne überlagern sich damit mehrere Wellen unterschiedlicher Amplitude und Phase. Dieser als Rayleigh-Fading bekannte Effekt führt bei Mobilfunk-Systemen zu starken orts- und zeitabhängigen Schwankungen des Empfangspegels. Besonders störend sind diese Schwankungen bei niedrigen Geschwindigkeiten der Mobilstation, und sie können im Stillstand der Mobilstation zu längeren Unterbrechungen führen. Üblicherweise eingesetzte Kanalcodierungen können erst mit zunehmender Geschwindigkeit wirksam werden.

Zur Bekämpfung dieser Effekte sind verschiedenen Maßnahmen bekannt. Die naheliegendste Lösung ist die Verwendung einer oder mehrerer weiterer Antennen, die räumlich getrennt angeordnet sind. Diese Maßnahme ergibt sich daraus, daß die starken Schwankungen durch die Überlagerung mehrerer Wellen an der Empfangsantenne entstehen. An den verschiedenen Antennen ergeben sich dann andere Phasen der Einzelkomponenten und damit ein anderes Überlagerungsergebnis. Durch eine gemeinsame Auswertung der Signale mehrerer Antennen läßt sich eine Verringerung der Schwankungseffekte erzielen.

Andere Maßnahmen beruhen darauf, daß tiefe Einbrüche im Empfangspegel nur über sehr begrenzte Frequenzbereiche auftreten. Es wird daher versucht, durch Nutzung eines größeren Frequenzbereiches lange tiefe Einbrüche zu vermeiden. Dies sind einerseits Frequenzsprungverfahren wie z.B. im GSM-System, bei denen jeder Burst auf einer anderen Frequenz ausgesendet wird. Andererseits sind breitbandige Übertragungsverfahren bekannt wie breitbandiges TDMA oder CDMA. Diese Verfahren benötigen Entzerrer bzw. RAKE-Empfänger (RAKE = kohärente Zusammenfassung von Mehrwegekomponenten). Bei CDMA-Verfahren kann bei Inkaufnahme eines Verlustes an Übertragungskapazität auf einen RAKE-Empfänger verzichtet werden. Mit den beschriebenen Maßnahmen im Frequenzbereich läßt sich eine gewisse Mittelung der Dämpfung über den belegten Frequenzbereich erreichen. Ferner werden langandauernde tiefe Einbrüche im Empfangspegel verhindert.

Aus EP-A-0 490 509 ist ein Verfahren zur Durchführung einer Übergabeprozedur bekannt, bei dem Meßwerte zur Interferenz sowohl von Funkfeststationen als auch von Teilnehmerstationen genutzt werden. Aus IEEE Communications Magazin, Bd. 30, Nr. 12, Dezember 1992, New York (US), XP 330093, S.90-95, W.T.Webb, Modulation Methods for PCN, IEEE Communications Magazin, BD. 28, Nr. 5, Mai 1990, New York (US), XP 132491, S.5-15, John A.C. Birngham, Multicarrier Modulation for Data Transmission: An Idea Whose Time Has Come, sind verschiedenen Modulationsverfahren für Funksysteme bekannt.

Der Erfindung liegt die Aufgabe zugrunde, für ein Funksystem eine Lösung anzugeben, durch die insbesondere bei niedrigen Geschwindigkeiten mobiler Stationen bis hin zum Stillstand die vorstehend beschriebenen Schwankungs- und Unterbrechungsprobleme nicht auftreten.

Diese Aufgabe wird gemäß der Erfindung in der Weise gelöst, daß in einer Teilnehmerstation die Übertragungsqualität zumindest eines Teils von Kanälen einer Funkfeststation, in deren Funkzelle sich die Teilnehmerstation befindet, gemessen wird. Kennzeichnend werden die Meßwerte von der Teilnehmerstation zyklisch zu der Funkfeststation übermittelt, und mittels netzseitiger Mittel zum Zuteilen von Kanälen wird der Teilnehmerstation aus den Gesamtinformationen der übermittelten Meßwerte ein Kanal mit einer möglichst optimalen Übertragungsqualität zugeteilt.

Vorteilhafte Ausgestaltungen und Weiterbildungen des Erfindungsgegenstandes sind in den abhängigen Patentansprüchen angegeben.

Nachfolgend wird das erfindungsgemäße Funksystem näher erläutert. Es beinhaltet eine Funkfeststation und Teilnehmer, die sich mit geringer Geschwindigkeit bewegen bis hin zu ortsfesten Teilnehmern. Die einer Funkfeststation zur Verfügung stehenden Kanäle werden annähernd gleichmäßig über das zur Verfügung stehende Frequenzband verteilt. Jede Mobilstation mißt ständig die Empfangspegel aller Frequenzen und übermittelt diese Werte an die Funkfeststation. Die Funkfeststation hat dann die Möglichkeit, aus den Gesamtinformationen die Frequenzen bzw. Kanäle den Teilnehmern so zuzuordnen, daß jeder Verbindung möglichst ein Kanal mit optimaler Übertragungsqualität zugeteilt wird. Dieses Verfahren besitzt einen Gewinn gegenüber dem bekannten Mittelungs-Verfahren, da keine Mittelung über einen Frequenzbereich durchgeführt wird, sondern jeder Verbindung eine Frequenz mit einem möglichst hohen Empfangspegel zugeteilt wird. Neben diesem Gewinn entfällt im allgemeinen die Notwendigkeit für Entzerrer, da die Amplituden- und Phasenverzerrungen in der Nähe eines Übertragungsmaximums im Frequenzbereich geringer sind als im Bereich eines Übertragungsminimums.

In Frequenzduplex-Systemen erfolgt über dieses Verfahren nur eine Optimierung der Verbindungen von der Funkfeststation zu den Mobilstationen, für die Verbindungen von den Mobilstationen zur Feststation wird keine Verbesserung erzielt. Zur Verbesserung dieser Verbindungen ist z.B. ein Diversityverfahren mit mehreren Empfangsantennen zu verwenden. Eine Verbesserung für beide Richtungen wird durch den Einsatz von Zeit-Duplex-Verfahren erzielt, da dann für beide Verbindungsrichtungen eines Kanals dieselbe Frequenz verwendet wird.

Bei einer bevorzugten Ausgestaltung der Erfindung ist als Modulation eine mehrstufige Phasenmodulation vorgesehen. Dabei kann beispielsweis Gray-Codierung eingesetzt werden. Die einzelnen übertragenen Worte werden als ein bestimmter Phasenwert übertragen oder es wird eine Differenzcodierung vorgenommen. Zur Übertragung eines Symbols wird zunächst eine Zeit für das Einschwingen des Kanals abgewartet, bevor die eigentliche Auswertung beginnt, während derer sich die Amplitude und Phase des Signals nicht mehr wesentlich ändert. Zur Begrenzung des Spektrums kann mit geringem Aufwand für die Funkfeststation ein amplitudenmäßiger Übergang und für die Mobilstationen ein kontrollierter Phasen- oder Amplitudenübergang vor der Wartezeit für das Einschwingen des Kanals eingesetzt werden.

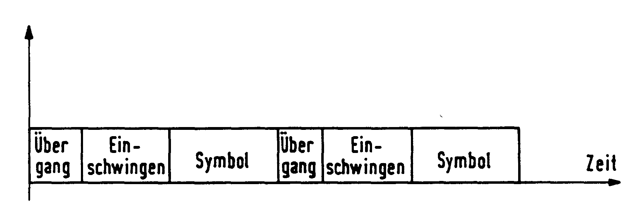

Die Übertragung eines Symbols besteht aus einer in der Figur dargestellten Sequenz. Hierbei handelt es sich jedoch nur um eine prinzipielle Darstellung, die nicht maßstäblich ist. Auf der Sendeseite wird die Übertragung eines Symbols um die Einschwingzeit verlängert und besteht zusätzlich aus den beiden Phasenübergängen zur spektralen Formung der Symbole.

Die beschriebene Art der Übertragung ermöglicht den Einsatz einer FFT (fast fourier transform) auf der Empfangsseite zur gleichzeitigen Auswertung aller interessierenden Kanäle. Als Duplex-Verfahren wird Zeit-Duplex angewandt, d.h. zunächst überträgt die Funkfeststation eine Reihe von Symbolen, einen sogenannten Burst, bevor die Mobilstationen eine Reihe von Symbolen übertragen. Der Funkfeststation werden von jeder Mobilstation zyklisch die Pegelmeßwerte für alle verwendeten Frequenzen bzw. für die n besten Frequenzen übertragen. Hieraus kann die Funkfeststation eine optimale Frequenzzuteilung für die Mobilstationen vornehmen.

## Patentansprüche

1. Funksystem
mit Funkfeststationen und Teilnehmerstationen mit geringer Geschwindigkeit bis hin zum Stillstand,
mit einer Teilnehmerstation zugeordneten Mitteln zum Messen der Übertragungsqualität zumindest eines Teils von Kanälen einer Funkfeststation, in deren Funkzelle sich die Teilnehmerstation befindet,
mit netzseitigen Mitteln zum Zuteilen von Kanälen, so daß für die Verbindungen jeweils ein Kanal mit einer möglichst optimalen Übertragungsqualität zugeteilt wird, **gekennzeichnet durch**,
der Teilnehmerstation zugeordneten Mitteln zum zyklischen Übermitteln der Meßwerte an die Funkfeststation,
eine derartige Ausbildung der netzseitigen Mittel zum Zuteilen von Kanälen, daß aus den Gesamtinformationen der an die Funkfeststation übermittelten Meßwerte einer ihrer Kanäle der Teilnehmerstation zugeordnet wird.

2. Funksystem nach Anspruch 1,
**gekennzeichnet durch**
Modulationsmittel zur Verwendung einer mehrstufigen Phasenmodulation bei der Übertragung.

3. Funksystem nach einem der vorherigen Ansprüche,
**gekennzeichnet durch**
Übertragungsmittel zur Übertragung von Symbolen, die vor der Auswertung eine Zeit für das Einschwingen des Übertragungskanals vorsehen.

4. Funksystem nach einem der vorherigen Ansprüche,
**gekennzeichnet durch**
Empfangsmittel, die **durch** den Einsatz einer FFT eine gleichzeitige Auswertung aller interessierenden Kanäle vornehmen.

5. Funksystem nach einem der vorherigen Ansprüche,
**gekennzeichnet durch**
Mittel zur Anordnung mehrerer Kanäle auf einer Frequenz **durch** ein Zeit-Duplex-Verfahren.

6. Funksystem nach einem der Ansprüche 1 bis 4,
**gekennzeichnet durch**
Mittel zur Trennung der Übertragungsrichtungen zwischen der Funkfeststation und der Teilnehmerstation **durch** ein Frequenz-Duplex-Verfahren.

## Claims

1. Radio system
having fixed radio stations and subscriber stations travelling at slow speeds down to zero,
having means, associated with a subscriber station, for measuring the transmission quality of at least one part of a fixed radio station, in whose radio cell the subscriber station is located,
having means at the network end for allocation of channels so that a channel having a transmission quality which is as optimum as possible is allocated for each of the connections,
**characterized by** -
means, associated with the subscriber station, for cyclic transmission of the measured values to the fixed radio station,
the means at the network end being configured for allocation of channels such that, from all the information of the measured value transmitted to the fixed radio station, one of its channels is allocated to the subscriber station.

2. Radio system according to Claim 1,
**characterized by**
modulation means for use of multistage phase modulation for the transmission.

3. Radio system according to one of the preceding claims,
**characterized by**
transmission means for transmitting symbols which, before the evaluation process, provide time for the stabilization of the transmission channel.

4. Radio system according to one of the preceding claims,
**characterized by**
receiving means which use an FFT for simultaneous evaluation of all the channels of interest.

5. Radio system according to one of the preceding claims,
**characterized by**
means for arranging a number of channels at one frequency by means of a time-division duplex method.

6. Radio system according to one of Claims 1 to 4,
**characterized by**
means for separating the transmission directions between the fixed radio station and the subscriber station by means of a frequency-division duplex method.

## Revendications

1. Système radio
ayant des stations radio fixes et des stations d'abonnés ayant une petite vitesse ou étant même immobiles,
ayant des moyens associés à une station d'abonné pour mesurer la qualité de transmission d'au moins une partie de canaux d'une station radio fixe dans la cellule radio de laquelle se trouve la station d'abonné,
ayant des moyens côté réseau pour attribuer des canaux de telle sorte qu'il est attribué pour les liaisons à chaque fois un canal ayant la qualité de transmission la plus optimale possible,
**caractérisé par**
des moyens associés à la station d'abonné pour la transmission cyclique des valeurs mesurées à la station radio fixe,
une constitution telle des moyens côté réseau pour l'attribution des canaux que, à partir de toutes les informations des valeurs mesurées transmises à la station radio fixe, l'un des canaux de celle-ci est attribué à la station d'abonné.

2. Système radio selon la revendication 1,
**caractérisé par**
des moyens de modulation pour l'utilisation d'une modulation de phase à plusieurs étages lors de la transmission.

3. Système radio selon l'une des revendications précédentes,
**caractérisé par**
des moyens de transmission qui sont destinés à la transmission de symboles et qui prévoient avant l'évaluation un temps pour l'établissement du canal de transmission.

4. Système radio selon l'une des revendications précédentes,
**caractérisé par**
des moyens de réception qui effectuent, en utilisant une FFT, une évaluation simultanée de tous les canaux intéressants.

5. Système radio selon l'une des revendications précédentes,
**caractérisé par**
des moyens pour mettre plusieurs canaux sur une fréquence par un procédé de duplex dans le temps.

6. Système radio selon l'une des revendications 1 à 4,
**caractérisé par**
des moyens pour la séparation des directions de transmission entre la station radio fixe et la station d'abonné par un procédé de duplex en fréquence.
